# EUROPÄISCHE PATENTSCHRIFT

(11) **EP 1 350 077 B1**
(45) Veröffentlichungstag und Bekanntmachung des Hinweises auf die Patenterteilung: **22.11.2006**
(21) Anmeldenummer: 01991709.5
(22) Anmeldetag: 28.12.2001
(51) Int. Cl.: G01F 1/66

(54) **DURCHFLUSSMESSER**
FLOW METER
DEBITMETRE

(30) Priorität: 09.01.2001 DE 10100612
(43) Veröffentlichungstag der Anmeldung: 08.10.2003
(73) Patentinhaber: Landis+Gyr GmbH, 90459 Nürnberg (DE)
(72) Erfinder: STARK, Reinhard, 90461 Nürnberg (DE); REISSINGER, Achim, 91522 Ansbach (DE)
(74) Vertreter: Bauerschmidt, Peter
(86) Internationale Anmeldenummer: PCT/DE2001/004950
(87) Internationale Veröffentlichungsnummer: WO 2002/055966

(56) Entgegenhaltungen:
- EP-A- 0 682 233
- DE-A- 3 020 282
- DE-A- 3 633 306
- DE-C- 4 336 370
- GB-A- 2 023 825
- US-A- 5 652 436
- US-A- 5 697 248

## Beschreibung

Die Erfindung bezieht sich auf einen Durchflussmesser für ein flüssiges oder gasförmiges Medium gemäss der im Oberbegriff des Anspruchs 1 genannten Art sowie auf einen hierfür geeigneten Ultraschallwandler.

Solche Durchflussmesser werden zum Messen von Strömungsgeschwindigkeiten mittels Ultraschall von in Rohrleitungen strömenden Medien eingesetzt und ermöglichen Bezugsmengen des Mediums zu erfassen.

Die DE 30 20 282 A1 beschreibt einen Ultraschall-Durchflussmesser mit einem von einem Medium durchströmten Messrohr und mit Interdigitalwandlern als Ultraschallerzeuger. Die Interdigitalwandler sind flächige Stücke aus einem keramischen Piezomaterial, das auf der einen Seite zwei mit einer Wechselspannung beaufschlagten Elektroden mit eine Interdigitalstruktur aufweisen. Bei dieser Struktur greifen die Elektroden kammartig ineinander, ohne sich jedoch zu berühren. Die andere, dem Medium zugewandte Seite ist mit einer vollflächigen Masse-Elektrode belegt.

Beim Anlegen von zwei gegeneinander um 180° phasenverschobenen Wechselspannungen gleicher Frequenz f zwischen den beiden Elektroden einerseits und der Masse-Elektrode andererseits werden durch die Interdigitalstruktur bedeckten Zonen des Piezomaterials so zu Dickenschwingungen angeregt, dass durch die Masse-Elektrode hindurch Ultraschallwellen unter einem Winkel zur Senkrechten auf die Masse-Elektrode abgestrahlt werden. Der Abstrahlwinkel hängt von der Frequenz f der Wechselspannungen und der Periodizität der Interdigitalstruktur ab.

Die GB 2'167'857 A schlägt ganz allgemein die Verwendung von PVDF als Piezomaterial für Ultraschallerzeuger bei Durchflussmessern vor.

Die DE 36 33 306 C2 zeigt einen Ultraschallerzeuger, der eine Kombination zweier sandwichartig übereinander gelegten Interdigitalwandler ist. Der eine Interdigitalwandler wirkt als Sender für Ultraschallwellen und weist als Piezomaterial eine Keramik auf wie der aus der DE 30 20 282 A1 bekannte Interdigitalwandler, der andere Interdigitalwandler dient als Empfänger und weist eine Platte aus PVDF statt aus Piezokeramik auf.

Die Elektroden des Senders und Hilfselektroden des Empfängers weisen identische Strukturen und Abmessungen auf und sind aufeinander exakt ausgerichtet, wobei die beiden Interdigitalwandler sandwichartig so übereinander gelegt sind, dass die Seite des Senders mit der Masse-Elektrode den Hilfselektroden des Interdigitalwandlers aus PVDF zugewandt ist. Die Masse-Elektrode des Interdigitalwandlers aus PVDF ist in Kontakt mit dem Medium, d.h. die Abstrahlung bzw. der Empfang der Ultraschallwellen erfolgt durch die Masseelektrode des Interdigitalwandlers aus PVDF hindurch. Von den Hilfselektroden kann beim Empfang von Ultraschallwellen ein elektrisches Signal abgenommen werden.

Verschiedene Konstruktionen von Ultraschall-Durchflussmessern sind bekannt. Sie unterscheiden sich im wesentlichen in der Laufrichtung der Ultraschallwellen auf der Messstrecke. Neben einer Durchschallung parallel zur Messrohrachse (DE 29 24 561 C2) und einer schiefen Durchschallung (GB 2 167 857 A), sind insbesondere auch Schallwege in V-Form oder W-Form (DE 39 41 544 A1) oder schraubenförmige Schallwege infolge Mehrfachreflexionen bekannt (DE 43 36 370 C1).

Aus Römpps Chemie-Lexikon (ISBN 3-440-04515-3), Seite 3325 geht hervor, dass die gegen viele Chemikalien beständigen Polyvinylfluorid (PVF) und Polyvinylidenfluorid (PVDF) in Form von gereckten Folien technisch nutzbare Piezoeigenschaften aufweisen.

Die Ultraschallgeber müssen gegen das Medium dicht in einem Gehäuse eingeschlossen werden und sind daher sehr teuer. Auch ist die Konstruktion des Durchflussmessers gemäss dem Stand der Technik sehr aufwendig. Dies beschränkt den Anwendungsbereich der Ultraschall - Durchflussmesser im wesentlichen auf den Fernwärmebereich, obwohl der Vorteil, dass der Durchflussmesser keine bewegten Teile aufweist, beispielsweise bei einem Einsatz dieser Technik zum Messen von Kalt- und Warmwassermengen offensichtlich ist.

Der Erfindung liegt die Aufgabe zugrunde, einen kostengünstigen Durchflussmesser mit vereinfachten Ultraschallwandlern und einen hierzu geeigneten Ultraschallwandler zu schaffen.

Die Lösung der Aufgabe gelingt erfindungsgemäß mit den Merkmalen des Anspruchs 1. Vorteilhafte Ausgestaltungen ergeben sich aus den abhängigen Ansprüchen.

Diese Lösungen ermöglichen einen entscheidenden Schritt zur Ablösung der kostengünstigen, weitverbreiteten Flügelradzähler.

Grundgedanke der Erfindung ist es, einen in das Messrohr einbringbaren Ultraschallwandler flexibel auszugestalten, wodurch nahezu keine mechanische Bearbeitung des Messrohres für die Anbringung der Ultraschallwandler erforderlich ist.

In einer einfachen Ausführungsform umfasst ein Ultraschallwandler nur ein flexibles Material mit Piezoeigenschaften, das mit einer Interdigitalstruktur versehen im Messrohr befestigbar ist. Als Material kommt bevorzugt eine Folie aus PVF oder PVDF zur Anwendung. Die Folie bildet dabei einen Korrosionsschutz für die Elektroden und eignet sich insbesondere für Anwendungen mit einer Mediumtemperatur von etwa < 40°. Die sonst üblichen Gegenelektroden sind nicht erforderlich.

Ein derartiger Ultraschallwandler lässt sich nahezu in allen Messrohrformen einfach einbringen. Dies liegt auch wesentlich in seiner geringen Bauhöhe, die den Fluss des Mediums im Messrohr nahezu nicht behindert. Seine Herstellung ist verblüffend einfach und eignet sich für automatisierte Serienproduktionen, wodurch eine besonders preiswerte und wirtschaftliche Herstellung möglich ist.

Weitere Vorteile und Details sind in der nachfolgenden Beschreibung angegeben. Der erfindungsgemäße Durchflussmesser und Ultraschallwandler eignen sich prinzipiell für alle gasförmigen oder flüssigen Medien.

Nachfolgend werden Ausführungsbeispiele der Erfindung anhand der Zeichnungen näher erläutert. Es zeigen
FIG 1 einen Durchflussmesser im Längsschnitt,
FIG 2 einen Interdigitalwandler in der Draufsicht,
FIG 3 den Interdigitalwandler im Querschnitt,
FIG 4 eine Anordnung zweier Interdigitalwandler,
FIG 5 den Durchflussmesser im Querschnitt,
FIG 6 den rohrförmigen Durchflussmesser im Querschnitt,
FIG 7 eine schräge Anordnung des Interdigitalwandlers und
FIG 8 eine paarweise Anordnung der Interdigitalwandler.

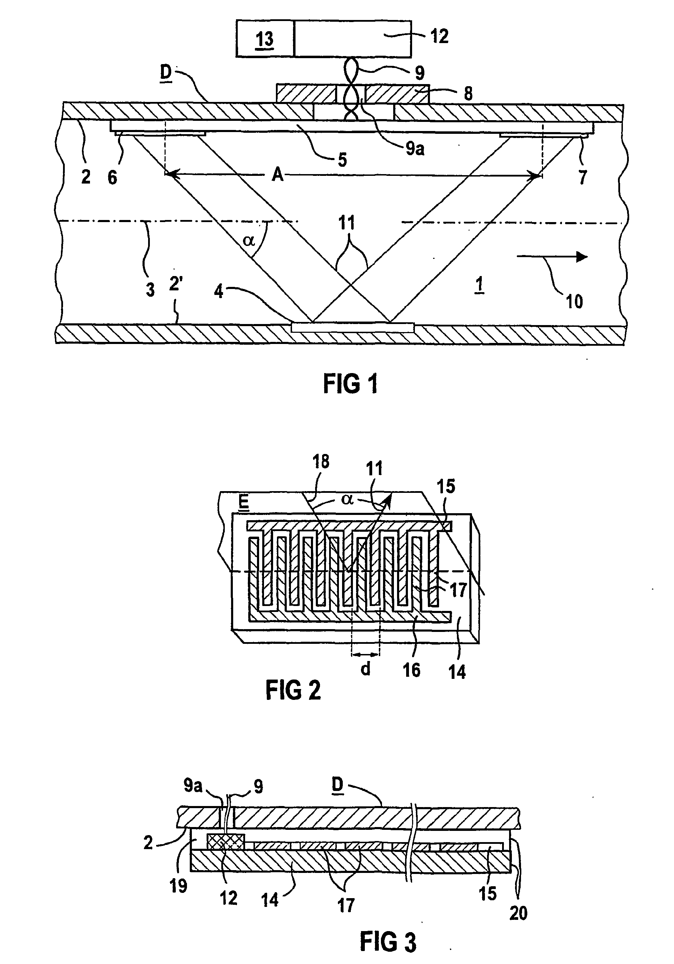

In der FIG 1 bedeuten 1 ein Messrohr, 2, 2' Innenflächen des Messrohrs 1, 3 eine Messrohrachse, 4 einen Spiegel für Ultraschall, 5 einen Wandlerträger, 6 und 7 Ultraschallwandler, 8 eine Durchführung, 9 ein mehrpoliges Kabel 9a einer Bohrung und 10 eine Strömungsrichtung eines Mediums.

Die Messanordnung im Durchflussmesser D ist am Beispiel eines Schallweges 11 in V-Form gezeigt. Die beiden Ultraschallwandler 6 und 7 sind in einem vorbestimmten Abstand A auf dem Wandlerträger 5 auf der Innenfläche 2 des Messrohrs 1 in der Strömungsrichtung 10 eines Mediums hintereinander angeordnet.

In einer Ausführung ist der Wandlerträger 5 auf der Wandlerseite plan und schmiegt sich mit der andern Seite an die Innenfläche 2 des Messrohrs 1 an. Eine Generator- und Empfangsschaltung 12 ist mit den Ultraschallwandlern 6, 7 über das Kabel 9 verbunden, das durch die gegen das Medium abgedichtete Durchführung 8 geführt ist. Die Generatorschaltung 12 erzeugt phasenverschobene Wechselspannungen einer vorbestimmten Frequenz f für den Betrieb der Ultraschallwandler 6, 7. Ggf. kann statt dem Kabel 9 auch eine mit Leiterbahnen versehene Folie verwendet werden.

Der erste Ultraschallwandler 6 sendet beispielsweise längs des Schallwegs 11 Ultraschallwellen unter einem Abstrahlwinkel α zur Messrohrachse 3 aus, welche an einer Spiegelfläche bzw. am Spiegel 4 auf der gegenüberliegenden Innenfläche 2' zum zweiten Ultraschallwandler 7 hin reflektiert werden. Die Ultraschallwellen erzeugen im zweiten Ultraschallwandler 7 gegeneinander phasenverschobene elektrische Empfangssignale, die über das Kabel 9 zur Empfangsschaltung 12 geleitet werden. Für die folgende Messung vertauschen die beiden Ultraschallwandler 6, 7 die Funktionen Senden und Empfangen.

In einer anderen Ausführung senden beide Ultraschallwandler 6, 7 gleichzeitig und warten anschliessend auf den Empfang der vom anderen Ultraschallwandler ausgesandten Schallwellen. Die Generator- und Empfangsschaltung 12 errechnet aus den Empfangssignalen die Strömungsgeschwindigkeit und den Durchfluss des längs der Messrohrachse 3 strömenden Mediums, beispielweise Kalt- oder Warmwasser usw., und gibt an ein Zählwerk 13 Impulse ab, die einer bestimmten Bezugsmenge proportional sind.

Als Wandlerträger 5 kann beispielsweise eine Folie dienen, auf der jeweils für sich funktionsfähige und gegen das Medium isolierte Ultraschallwandler 6,7 angeordnet sind. Der Wandlerträger 5 kann jedoch auch von einer PVF- oder PVDF-Folie gebildet sein, so dass die Ultraschallwandlerfunktion von einer Interdigitalstruktur erfüllt werden kann.

Die FIG 2 zeigt beispielhaft ein Piezoelement 14 der Ultraschallwandler 6 (FIG 1), 7 (FIG 1) zur allgemeinen Erläuterung ihrer Funktion. Das Piezoelement 14 ist ein Substrat aus einem Piezomaterial mit einer zur Dicke parallelen Polarisation und trägt auf einer Oberfläche zwei parallele Elektroden 15, 16, deren benachbarte Berandungen als kammartig ineinandergreifende Finger 17 einer Interdigitalstruktur 15, 16, 17 ausgebildet sind. Die Finger 17 jeder Elektrode 15, 16 sind gleichmässig voneinander beabstandet, wobei benachbarte Finger 17 derselben Elektrode 15 bzw. 16 eine Distanz d aufweisen. Ein mäanderförmiges Band frei von Elektrodenmaterial trennt die beiden Elektroden 15, 16, 17.

Die Ultraschallwellen werden parallel zu einer auf der Oberfläche des Piezoelements 14 senkrechten Ebene E abgestrahlt, deren gestrichelt gezeichnete Schnittlinie die Finger 17 halbiert. Der Schallweg 11 ist um den Abstrahlwinkel α zum Lot 18, einer Senkrechten auf die Oberfläche des Piezoelements 14, geneigt. Die Wellenlänge λ des Ultraschalls im Medium und die Distanz d bestimmen den Abstrahlwinkel α nach der Formel cos α = λ / d.

Für die Betriebsbedingungen und weitere Interdigitalstrukturen 15, 16, 17 ist hier auf die Beschreibung der eingangs erwähnten DE 30 20 282 (Seite 8, Zeile 11 bis Seite 10, Zeile 4 und Seite 12, Zeilen 9 bis 33) verwiesen. Für den Abstrahlwinkel α = 45° und der Wellenlänge λ ≈ 1,45 mm in Kaltwasser bei einer Frequenz f ≈ 1 MHz beträgt die Distanz d ≈ 2.05 mm.

Beim Anlegen der beiden gegeneinander um 180° phasenverschobenen Wechselspannungen gleicher Frequenz f zwischen den beiden Elektroden 15, 16 einerseits und dem Messrohr 1 andererseits werden die durch die Interdigitalstruktur bedeckten Zonen des Piezoelements 14 so zu Dickenschwingungen angeregt, dass die freie Oberfläche des Piezoelements 14 die Ultraschallwellen unter dem Abstrahlwinkel α ins Medium abstrahlt.

Im Gegensatz zu den im Stand der Technik beschriebenen Interdigitalwandlern weist das Piezoelement 14 keine Gegenelektrode auf der von der Interdigitalstruktur 15, 16, 17 abgewandten Seite auf. In Versuchen wurde nämlich festgestellt, dass bei der Verwendung von dünnen Folien als Piezoelement keine Gegenelektrode erforderlich ist.

In der FIG 3 ist ein Querschnitt durch einen Ultraschallwandler dargestellt. Diese Darstellung gilt prinzipiell für beide Ultraschallwandler 6 und 7. Der Ultraschallwandler 6 bzw. 7 umfasst wenigstens das Piezoelement 14, die Elektroden 15, 16 (FIG2) mit den Fingern 17 und eine Deckschicht 19, die als Wandlerträger dienen kann. Die Deckschicht 19 überzieht die Oberfläche des Piezoelements 14 mit der Interdigitalstruktur 15, 16, 17 und schirmt das Material der Elektroden 15, 16, 17 gegen den Einfluss des Mediums, insbesondere im Randbereich, ab. Die Deckschicht 19 und das Piezoelements 14 bilden einen Schichtverbund 20. Mit der freien Oberfläche der Deckschicht 19 schmiegt sich Schichtverbund 20 des Ultraschallwandlers 6 bzw. 7 an die Innenfläche 2. Die Deckschicht 19 besteht bevorzugt aus Kunststoff und wird mittels Vergiessen oder Spritzgiessen aufgebracht.

In einer anderen Ausführung wird eine Kunststoff-Folie gegen das Medium dicht auf die Elektrodenseite des Piezoelements 14 aufkaschiert. Wichtig ist eine innige Verbindung der Deckschicht 19 mit dem Material des Piezoelements 14 und dem Mantel des Kabels 9, so dass das Medium nicht zu den unter der Deckschicht 19 eingeschlossenen Elektroden 15, 16, 17 vordringen kann. Für das Piezoelement 14 eignen sich neben der bekannten Piezokeramik auch gereckte Folien aus Polyvinylfluorid (PVF) oder Pölyvinylidenfluorid (PVDF) oder einem Mischpolymer mit Anteilen von PVF und/oder PVDF.

In einer vereinfachten Ausführung ist die Deckschicht 19 nur im Randbereich erforderlich. Dies gilt für den Fall, dass keine Isolation zwischen Messrohr 1 und Elektroden erforderlich ist, z.B. bei einem Messrohr aus Kunststoff. Selbstverständlich kann der Schichtverbund auch mit seiner Elektrodenseite (mit Deckschicht) dem Medium zugewandt werden.

In einer anderen Ausführung ist auf dem Piezoelement 14 ausserhalb der durch die Interdigitalstruktur 15, 16, 17 beanspruchten Fläche auch die Generator- und Empfangsschaltung 12 oder Teile davon innerhalb der Deckschicht 19 angeordnet.

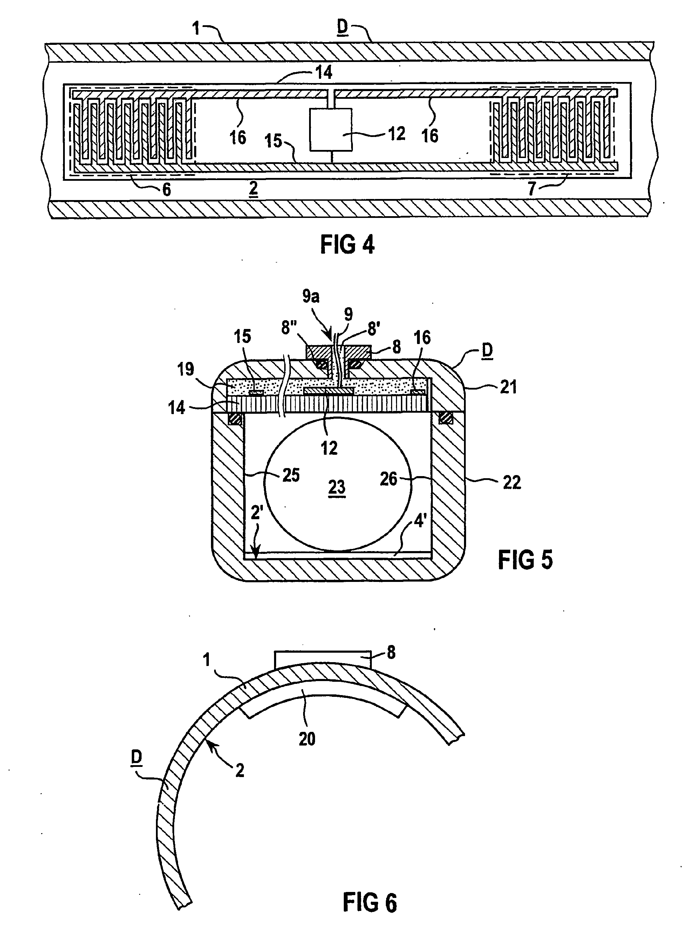

Die in der FIG 4 in einer Draufsicht gezeigte Ausführung weist im Messrohr 1 den an der Innenfläche 2 angeordneten Wandlerhalter 5 (FIG 1) auf. Der Wandlerhalter 5 ist in dieser Ausführung der Schichtverbund 20 (FIG 3), wobei in der Darstellung der FIG 4 nur das Piezoelement 14 sichtbar ist. Das Piezoelement 14 ist transparent dargestellt, so dass die auf dem Piezoelement 14 platzierte Generator- und Empfangsschaltung 12 und die Interdigitalstrukturen 15, 16, 17 (FIG 2) durch das Piezoelement 14 hindurch erkennbar sind.

Die Interdigitalstrukturen sind im Abstand A (FIG 1) gemeinsam auf dem streifenförmigen Piezoelement 14 angeordnet, wobei der Abstand A zwischen den Mitten der Ultraschallwandler 6, 7 gemessen ist. In einer Ausführung sind die Elektroden 15 bzw. 16 der beiden Interdigitalstrukturen 15, 16, 17 über Leiterbahnen miteinander und mit der Generator- und Empfangsschaltung 12 verbunden. In einer anderen Ausführung sind die vier Elektroden 15, 16 getrennt der Generator- und Empfangsschaltung 12 zugeführt. Die eine Ausführung ist in der Zeichnung der FIG 4 am Beispiel der Elektrode 15 und die andere am Beispiel der Elektrode 16 dargestellt.

In der Ausführung, bei der die Elektroden 15 und 16 der einen Interdigitalstruktur mit den entsprechenden Elektroden 15, 16 der anderen Interdigitalstruktur direkt durch Leiterbahnen auf dem Piezoelement 14 miteinander verbunden sind, werden die Ultraschallwellen gleichzeitig in beiden Ultraschallwandlern 6, 7 unter dem Abstrahlwinkel von ±45° erzeugt.

Die mit der Strömung sich auf dem V-förmigen Schallweg 10 (FIG 1) fortpflanzenden Ultraschallwellen treffen nach der Reflexion am Spiegel 4 (FIG 1) am zweiten Ultraschallwandler 7 etwas früher ein als die stromaufwärts eilenden Ultraschallwellen am ersten Ultraschallwandler 6. Das resultierende Empfangssignal in jeder der Elektroden 15, 16 ist eine Überlagerung der beiden in den Ultraschallwandlern 6, 7 erzeugten Signale, wobei die durch den Mitführungseffekt bewirkte Zeitverzögerung eine Phasenverschiebung der in den Ultraschallwandlern 6, 7 eintreffenden Ultraschallwellen bewirkt.

Die Generator- und Empfangsschaltung 12 erzeugt die benötigten Wechselspannungen, errechnet aus der Phasenverschiebung der Empfangssignale an den Elektroden 15 und 16 die Strömungsgeschwindigkeit bzw. die Durchflussmenge und gibt über das Kabel 9 (FIG 3) eine Impulsfolge nach Aussen an das Zählwerk 13 (FIG 1) ausserhalb des Messrohrs 1 ab, wobei jeder Impuls einer vorbestimmen Durchflussmenge entspricht.

Die andere Ausführung mit getrennt an die Generator- und Empfangsschaltung 12 angeschlossenen Ultraschallwandlern 6, 7 bestimmt die Schaltung 12, ob die Ultraschallwellen gleichzeitig oder nacheinander von den beiden Ultraschallwandler 6, 7 ausgesandt werden. Ebenso erfolgt die Auswertung der Empfangssignale jedes Ultraschallwandlers 6, 7 unabhängig voneinander.

Die Ausführungen nach der FIG 4 weisen den Vorteil auf, dass ausserhalb des Messrohrs 1 nur die Spannungsversorgung der Generator- und Empfangsschaltung 12 und das Zählwerk 13 (FIG 1) vorhanden ist und die Elektronik der Generator- und Empfangsschaltung 12 im Messrohr 1 eingeschlossen ist.

In einer weiteren Ausführung sind die Elektroden 15, 16 über ein zwei- bzw. vieradriges Kabel 9 mit der ausserhalb des Messrohrs 1 angeordneten Generator- und Empfangsschaltung 12 verbunden.

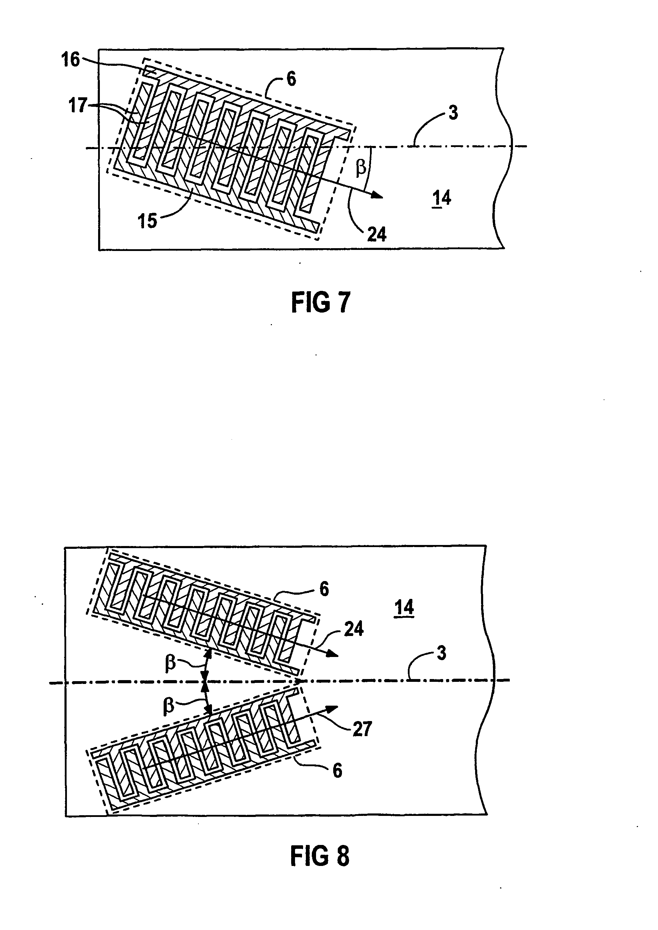

Die FIG 5 zeigt eine mögliche Ausführung des Messrohrs 1 (FIG 1) im Querschnitt. Das Messrohr 1 besteht aus einem Dekkel 21 und einer Wanne 22 von rechteckigem Querschnitt. Die rechteckige Querschnittsfläche des Messrohrs 1 geht am Ende in den runde Fläche des lichten Querschnitts 23 einer hier nicht gezeigten Rohrleitung über, um einen Einbau des Ultraschallmessers in die Rohrleitung zu ermöglichen. Der Schichtverbund 20 (FIG 3), der das Piezoelement 14 und die Deckschicht 19 umfasst, ist auf der Innenfläche 2 (FIG 1) des Deckels 21 angeordnet.

Das in der Zeichnung der FIG 5 dargestellte Beispiel umfasst die beispielsweise in Spritzgusstechnik hergestellte Deckschicht19 mit einem das Kabel 9 umhüllenden Zapfen 8' als Teil der Durchführung 8. Der Zapfen 8' durchdringt den Deckel in einer Bohrung und axial die in die Bohrung geschraubte Durchführung 8. Eine Dichtung (z.B. O-Ring) 8" unter der Durchführung 8 ist gegen den Zapfen 8' und gegen die Wand der Bohrung im Deckel 21 gepresst, damit das Messrohr 1 gegen einen Verlust des Mediums abgedichtet ist. Gleichzeitig ist der Schichtverbund 20 im Messrohr 1 gehalten.

In anderen Ausführungen ist der Schichtverbund 20 auf der Innenfläche 2 beispielsweise zusätzlich mittels Schrauben oder einer Klebmasse befestigt. Dichtmittel, insbesondere eine Gummidichtung, dichten die Fügstelle zwischen Deckel 21 und Wanne 22 ab, wie dies auf der rechten Seite in der Zeichnung der FIG 5 dargestellt ist. Auf der linken Seite in der Zeichnung der FIG 5 ist eine andere Lösung der Abdichtung vorgestellt.

Der Schichtverbund 20 wird mittels des Deckels 21 mit der Seite des Piezoelements 14 direkt auf die Gummidichtung gepresst. Die Durchführung 8, der Zapfen 8' und die dichte Einführung des Kabels 9 erübrigen sich; dies stellt eine vorteilhafte Vereinfachung dar. Der Schallweg 11 (FIG 1) ist V-förmig und der Spiegel 4 auf der Innenfläche 2' des Wannenbodens angeordnet, wie dies im Längsschnitt der FIG 1 dargestellt ist.

In der FIG 6 weist das Messrohr 1 eine gekrümmte, insbesondere eine runde Innenfläche 2 auf. Dank Biegsamkeit solcher Piezoelemente 14 aus PVF- bzw. PVDF-Folie ist der Schichtverbund 20 ohne Schwierigkeit an die Krümmung der Innenwand 2 anzupassen. Keinerlei Einbussen in Bezug auf die Schallabstrahlung sind festzustellen.

Bekanntlich weist das strömende Medium über den Querschnitt des Messrohrs 1 ein Strömungsprofil auf. An der Innenwand 2 ist die Strömungsgeschwindigkeit praktisch null und erreicht im Idealfall auf der Messrohrachse 3 (FIG 1) ein Maximum. Für die Genauigkeit der Messung ist es wichtig, die Strömungsgeschwindigkeiten im Strömungsprofil richtig zu erfassen, da das Strömungsprofil von der Strömungsgeschwindigkeit abhängig ist.

Die eingangs erwähnte DE 43 36 370 befasst sich mit diesem Problem und löst die Aufgabe mittels den dort vorgeschlagenen, mehrfach reflektierten Schallwegen 11 (FIG 1) mit Hilfe von schräggestellten Spiegel für das Umlenken der Ultraschallwellen.

Die Anordnung gemäss der FIG 7 mit einer im Azimut gedrehter der Interdigitalstruktur 15, 16, 17 ermöglicht eine wesentliche Verbilligung des Durchflussmessers mit dem mehrfach gespiegelten Schallweg 11 (FIG 1). Eine Komponente des Schallwegs 11 in der Ebene des Piezoelements 14 ist parallel zu den die Finger 17 verbindenden Teile der Elektroden 15, 16 und zeigt eine ausgezeichnete Richtung 24 des Ultraschallwandlers 6 an. Gegenüber der Projektion der Messrohrachse 3 auf die Ebene des Piezoelements 14 ist die ausgezeichnete Richtung 24 um einen Azimutwinkel β gedreht.

Die Ultraschallwellen des einen Ultraschallwandlers 6 bzw. 7 (FIG 1) werden zunächst an der einen Seitenwand 25 (FIG 5) der Wanne 22 (FIG 5) gespiegelt und werden von dort auf den Spiegel 4 (FIG 5) der Innenfläche 2' (FIG 5) geworfen und dort reflektiert. Vom Spiegel 4 erstreckt sich der Schallweg 11 nach einer weiteren Reflexion an der anderen Seitenwand 26 (FIG 5) der Wanne 22 zum anderen Ultraschallwandler 7 bzw. 6. Die ausgezeichnete Richtung des in der Zeichnung der FIG 7 nicht gezeigten zweiten Ultraschallwandlers 7 ist parallel zur ausgezeichneten Richtung 24 des ersten Ultraschallwandlers 6 ausgerichtet und auf dem andern Ende des streifenförmigen Piezoelements 14 angeordnet.

Bei grösseren Querschnitten des Messrohrs 1 werden mit Vorteil zwei parallele, spiralig geformte Schallwege 11 für eine gute Durchstrahlung des Messrohrs 1 verwendet. Die FIG 8 zeigt eine mögliche Anordnung der Elektroden 15, 16, 17 (FIG 7) eines ersten Paars gebildet aus den Ultraschallwandlern 6, 6' auf dem Piezoelement 14. Die ausgezeichneten Richtungen 24 und 27 der Ultraschallwandler 6, 6' schliessen einen Winkel von 2β ein, wobei β der Azimutwinkel und die Projektion der Messrohrachse 3 eine Winkelhalbierende des Winkels 2β ist.

Das in der Zeichnung der FIG 8 nicht gezeigte zweite Paar der Ultraschallwandler 7 (FIG 4) ist auf dem anderen Ende des Piezoelements 14 angeordnet und weist dieselbe Struktur und Anordnung der Elektroden 15, 16, 17 auf wie das erste Paar 6,6', jedoch ist das zweite Paar gegenüber dem ersten Paar 6,6' um 180° in der Ebene des Piezoelements 14 gedreht.

Der Vollständigkeit halber ist zu erwähnen, dass die Interdigitalstrukturen bevorzugt aus aufgedampftem oder aufkaschiertem Elektrodenmaterial bestehen, wobei die entgültige Form durch Ätzen gewonnen wird. Das Elektrodenmaterial kann auch durch Masken hindurch aufgedampft werden.

Ein weiterer Vorteil dieser Durchflussmesser ist das Fehlen von Elektroden, die mit dem Medium reagieren oder durch Schwebestoffe im Medium erodiert werden.

## Patentansprüche

1. Durchflussmesser zum Messen der Durchflussmenge eines flüssigen oder gasförmigen Mediums, mit einem Messrohr (1) und wenigstens zwei mit einer Generator- und Empfangsschaltung (12) verbundenen Ultraschallwandlern (6; 6'; 7), welche kammartig ineinander greifende, elektrisch getrennte Elektroden (15; 16) auf der einen Seite eines flächigen Piezoelements (14) unter Bildung einer Interdigitalstruktur umfassen, wobei die Piezoelemente (14) aus einem flexiblen Werkstoff gefertigt und die Ultraschallwandler (6, 6', 7) innerhalb des Messrohres (1) angeordnet sind,
**dadurch gekennzeichnet,**
**dass** der Werkstoff als Schutz für die Interdigitalstruktur vor dem Medium dient, wobei die eine Seite der Piezoelemente (14) der Innenfläche (2,2') des Messrohrs (1) zugewandt ist.

2. Durchflussmesser nach Anspruch 1,
**dadurch gekennzeichnet, dass** der Werkstoff für das Piezoelement (14) Polyvinylfluorid (PVF), Polyvinylidenfluorid (PVDF) oder ein Mischpolymer mit wenigstens einem Anteil von PVF oder PVDF ist.

3. Durchflussmesser nach Anspruch 1 oder 2,
**dadurch gekennzeichnet, dass** der Werkstoff als Folie ausgebildet ist.

4. Durchflussmesser nach einem der Ansprüche 1 bis 3, **dadurch gekennzeichnet, dass** die Ultraschallwandler (6, 6', 7) ein gemeinsames Piezoelement (14) umfassen.

5. Durchflussmesser nach Anspruch 4, **dadurch gekennzeichnet, dass** auf einer ausserhalb der Interdigitalstrukturen liegenden Fläche des Piezoelements die Generator- und Empfangsschaltung oder Teile davon angeordnet sind.

6. Durchflussmesser nach einem der Ansprüche 1 bis 5, **dadurch gekennzeichnet, dass** die Interdigitalstruktur (15, 16, 17) von einer schützenden Deckschicht bedeckt ist, wobei das Piezoelement (14) mit der Interdigitalstruktur (15, 16, 17) und der Deckschicht (19) einen Schichtverbund bildet.

7. Durchflussmesser nach Anspruch 6, **dadurch gekennzeichnet, dass** der Schichtverbund (20) auf einem Wandlerträger (5) angeordnet ist.

8. Durchflussmesser nach einem der Ansprüche 1 bis 7, **dadurch gekennzeichnet, dass** das Messrohr (1) auf wenigstens einer Innenfläche (2') eine Spiegelfläche (4) für die Umlenkung der Ultraschallwellen aufweist.

9. Durchflussmesser nach einem der Ansprüche 1 bis 8, **dadurch gekennzeichnet, dass** die Ultraschallwandler (6, 6', 7) quer zu Fingern (17) ihrer Interdigitalstruktur (15, 16, 17) ausgerichtete ausgezeichnete Richtungen (24, 27) umfassen, welche parallel zur Messrohrachse (3) des Messrohrs (1) verlaufen.

10. Durchflussmesser nach einem der Ansprüche 1 bis 8, **dadurch gekennzeichnet, dass** die Ultraschallwandler (6, 6', 7) quer zu Fingern (17) ihrer Interdigitalstruktur (15, 16, 17) ausgerichtete ausgezeichnete Richtungen (24, 27) umfassen, welche zueinander parallel und schief zur Messrohrachse (3) des Messrohrs (1) verlaufen.

11. Durchflussmesser nach einem der Ansprüche 1 bis 8, **dadurch gekennzeichnet, dass** zwei nebeneinander angeordnete Ultraschallwandler (6; 6') ein Paar bilden und quer zu Fingern (17) ihrer Interdigitalstrukturen (15, 16, 17) ausgerichtete ausgezeichnete Richtungen (24, 27) aufweisen, die einen Winkel 2β einschliessen und dass die Winkelhalbierende des Winkels 2β parallel zur Messrohrachse (3) des Messrohrs (1) verläuft.

12. Durchflussmesser nach einem der Ansprüche 1 bis 11, **dadurch gekennzeichnet, dass** das Messrohr (1) eine Bohrung (9a) aufweist, durch die ein Kabel (9) oder Anschlussleitungen der Ultraschallwandler (6, 7) und/oder der Generator-Empfangsschaltung (12) geführt ist/sind.

13. Durchflussmesser nach einem der Ansprüche 1 bis 12 in Verbindung mit Anspruch 6, **dadurch gekennzeichnet, dass** der Schichtverbund 20 zwischen Wanne und Deckel eines Messrohrs (1), insbesondere von rechteckigem Querschnitt, gehalten ist, wobei die freie Seite des Piezoelements (14) gegen eine auf dem Rand der Wanne 22 umlaufende Gummidichtung gepresst wird.

14. Durchflussmesser nach einem der vorhergehenden Ansprüche, **dadurch gekennzeichnet, dass** ein Wandlerträger vorgesehen ist, auf welchem das Piezoelement (14) und die Elektroden (15, 16) angeordnet sind, wobei der Wandlerträger (5) eine flexible Folie ist.

15. Durchflussmesser nach Anspruch 14, **dadurch gekennzeichnet, dass** der Wandlerträger (5) aus Polyvinylfluorid (PVF), Polyvinylidenfluorid (PVDF) oder ein Mischpolymer mit wenigstens einem Anteil von PVF oder PVDF ist.

## Claims

1. Flow meter for measuring the flow rate of a liquid or gaseous medium, comprising a measuring tube (1) and at least two ultrasonic transducers (6, 6', 7) connected to a generator and receiver circuit (12), which transducers comprise electrically isolated electrodes (15, 16) that mesh in a comb-like manner on one side of a two-dimensional piezo element (14) to form an interdigital structure, the piezo elements (14) being made from a flexible material and the ultrasonic transducers (6, 6', 7) being arranged within the measuring tube (1), **characterised in that**, the material protects the interdigital structure from the medium, one side of the piezo elements (14) facing the inner surface (2, 2') of the measuring tube (1).

2. Flow meter according to claim 1, **characterised in that** the material for the piezo element (14) is polyvinyl fluoride (PVF), polyvinylidene fluoride (PVDF) or a copolymer comprising at least one of PVF or PVDF.

3. Flow meter according to claim 1 or 2, **characterised in that** the material is in the form of a film.

4. Flow meter according to any one of claims 1 to 3, **characterised in that** the ultrasonic transducers (6, 6', 7) comprise a common piezo element (14).

5. Flow meter according to claim 4, **characterised in that** the generator and receiver circuit or parts thereof are arranged on a surface of the piezo element that is external to the interdigital structures.

6. Flow meter according to any one of claims 1 to 5, **characterised in that** the interdigital structure (15, 16, 17) is covered by a protective cover layer, the piezo element (14) forming with the interdigital structure (15,16,17) and the cover layer (19) a composite layer structure.

7. Flow meter according to claim 6, **characterised in that** the composite layer structure (20) is arranged on a transducer support (5).

8. Flow meter according to any one of claims 1 to 7, **characterised in that** the measuring tube (1) has on at least one inner surface (2') a mirrored surface (4) for deflecting ultrasonic waves.

9. Flow meter according to any one of claims 1 to 8, **characterised in that** the ultrasonic transducers (6, 6', 7) comprise marked directions (24, 27) which are aligned transversely to fingers (17) of their interdigital structure (15, 16, 17) and run parallel to the measuring tube axis (3) of the measuring tube (1).

10. Flow meter according to any one of claims 1 to 8, **characterised in that** the ultrasonic transducers (6, 6', 7) comprise marked directions (24, 27) which are aligned transversely to fingers (17) of their interdigital structure (15, 16, 17) and run parallel to each other and obliquely to the measuring tube axis (3) of the measuring tube (1).

11. Flow meter according to any one of claims 1 to 8, **characterised in that** two ultrasonic transducers (6, 6') placed next to one another form a pair and have marked directions (24, 27), which are aligned transversely to fingers (17) of their interdigital structure (15, 16, 17) and enclose an angle 2β, and **in that** the bisector of the angle 2β runs parallel to the measuring tube axis (3) of the measuring tube (1).

12. Flow meter according to any one of claims 1 to 11, **characterised in that** the measuring tube (1) has a hole (9a), through which a cable (9) or connection leads for the ultrasonic transducers (6,7) and or the generator/receiver circuit (12) is/are guided.

13. Flow meter according to any one of claims 1 to 12 in conjunction with claim 6, **characterised in that** the composite layer structure (20) is held between the body and cover of the measuring tube (1), which is in particular rectangular in cross-section, the free side of the piezo element being pressed against a rubber seal surrounding the edge of the body (22).

14. Flow meter according to any one of the preceding claims, **characterised in that** a transducer support is provided on which the piezo element (14) and electrodes (15, 16) are arranged, the transducer support being a flexible film.

15. Flow meter according to claim 14, **characterised in that** the transducer support (5) is made from polyvinyl fluoride (PVF), polyvinylidene fluoride (PVDF) or a copolymer comprising at least one ofPVF or PVDF.

## Revendications

1. Débitmètre pour mesurer le débit d'un milieu liquide ou gazeux, avec un tube de mesurage (1) et au moins deux transducteurs d'ultrasons, (6, 6', 7) reliés à un circuit générateur et récepteur (12), lesquels comprennent des électrodes isolées électriquement (15, 16), en forme de peigne s'emboîtant l'un dans l'autre, sur une face d'un élément piézoélectrique plat (14) formant une structure de doigts imbriqués, les éléments piézoélectriques (14) étant réalisés dans un matériau flexible et les transducteurs d'ultrasons (6, 6', 7) étant disposés à l'intérieur du tube de mesurage (1),
**caractérisé en ce que**
le matériau sert de protection pour la structure de doigts imbriqués contre le médium, moyennant un côté des éléments piézoélectriques (14) est tourné vers la surface interne (2, 2') du tube de mesurage (1).

2. Débitmètre selon la revendication 1,
**caractérisé en ce que** le matériau pour l'élément piézoélectrique (14) est du polyfluorure de vinyle (PVF), du polyvinylidènefluorure (PVDF) ou un copolymère avec au moins un pourcentage de PVF ou de PVDF.

3. Débitmètre selon la revendication 1 ou 2,
**caractérisé en ce que** le matériau a la forme d'un film.

4. Débitmètre selon l'une quelconque des revendications 1 à 3, **caractérisé en ce que** les transducteurs d'ultrasons (6, 6', 7) comprennent un élément piézoélectrique commun (14).

5. Débitmètre selon la revendication 4, **caractérisé en ce que** sur une surface de l'élément piézoélectrique située en dehors de la structure de doigts imbriqués sont disposés le circuit générateur et récepteur ou des parties de celui-ci.

6. Débitmètre selon l'une quelconque des revendications 1 à 5, **caractérisé en ce que** la structure de doigts imbriqués (15, 16, 17) est recouverte d'une couche de recouvrement protectrice, l'élément piézoélectrique (14) formant avec la structure de doigts imbriqués (15, 16, 17) et la couche de recouvrement (19) une couche composite.

7. Débitmètre selon la revendication 6, **caractérisé en ce que** la couche composite (20) est disposée sur un support de transducteur (5).

8. Débitmètre selon l'une quelconque des revendications 1 à 7, **caractérisé en ce que** le tube de mesurage (1) présente sur au moins une surface interne (2') une surface réfléchissante (4) pour changer la direction des ondes ultrasonores.

9. Débitmètre selon l'une quelconque des revendications 1 à 8, **caractérisé en ce que** les transducteurs d'ultrasons (6, 6', 7) comportent des directions marquées (24, 27), orientées en travers des doigts (17) de leur structure de doigts imbriqués (15, 16, 17), qui sont parallèles à l'axe (3) du tube de mesurage (1).

10. Débitmètre selon l'une quelconque des revendications 1 à 8, **caractérisé en ce que** les transducteurs d'ultrasons (6, 6', 7) comportent des directions marquées (24, 27), orientées en travers des doigts (17) de leur structure de doigts imbriqués (15, 16, 17), qui sont parallèles l'une par rapport à l'autre et obliques par rapport à l'axe (3) du tube de mesurage (1).

11. Débitmètre selon l'une quelconque des revendications 1 à 8, **caractérisé en ce que** deux transducteurs d'ultrasons disposés l'un à côté de l'autre (6, 6') forment une paire et présentent des directions marquées (24, 27), orientées en travers des doigts (17) de leur structure de doigts imbriqués (15, 16, 17), qui forment un angle 2β et **en ce que** la bissectrice de l'angle 2β est parallèle à l'axe (3) du tube de mesurage (1).

12. Débitmètre selon l'une quelconque des revendications 1 à 11, **caractérisé en ce que** le tube de mesurage (1) présente un perçage (9a) au travers duquel est ou sont passés un câble (9) ou des fils de connexion des transducteurs d'ultrasons (6, 7) et/ou du circuit générateur et récepteur (12).

13. Débitmètre selon l'une quelconque des revendications 1 à 12 conjointement à la revendication 6, **caractérisé en ce que** la couche composite 20 est maintenue entre la cuve et le couvercle d'un tube de mesurage (1), en particulier de section transversale rectangulaire, le côté libre de l'élément piézoélectrique étant pressé (14) contre un joint en caoutchouc placé sur toute le périmètre du bord de la cuve 22.

14. Débitmètre selon l'une quelconque des revendications précédentes, **caractérisé en ce qu'**il est prévu un support de transducteur sur lequel sont disposés l'élément piézoélectrique (14) et les électrodes (15, 16), le support de transducteur (5) étant un film flexible.

15. Débitmètre selon la revendication 14, **caractérisé en ce que** le support de transducteur (5) est en polyfluorure de vinyle (PVF), en polyvinylidènefluorure (PVDF) ou est un copolymère avec au moins un pourcentage de PVF ou de PVDF.
